(19) Europäisches Patentamt / European Patent Office / Office européen des brevets

(11) **EP 4 657 569 A1**

(12) **EUROPEAN PATENT APPLICATION**
published in accordance with Art. 153(4) EPC

(43) Date of publication:
**03.12.2025 Bulletin 2025/49**

(21) Application number: **24785224.7**

(22) Date of filing: **03.04.2024**

(51) International Patent Classification (IPC):
$H01M\ 4/525^{(2010.01)}$    $H01M\ 4/505^{(2010.01)}$
$H01M\ 4/131^{(2010.01)}$    $H01M\ 10/052^{(2010.01)}$
$H01M\ 4/02^{(2006.01)}$

(52) Cooperative Patent Classification (CPC):
Y02E 60/10

(86) International application number:
**PCT/KR2024/004347**

(87) International publication number:
**WO 2024/210522 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 KR 20230043516**

(71) Applicant: **LG CHEM, LTD.**
**Seoul 07336 (KR)**

(72) Inventors:
• **KIM, Jun Gyu**
 **Daejeon 34122 (KR)**
• **KIM, Kyung Inn**
 **Daejeon 34122 (KR)**
• **JEONG, Jong Seok**
 **Daejeon 34122 (KR)**

• **KIM, Kyeong Rak**
 **Daejeon 34122 (KR)**
• **KANG, Ho Sung**
 **Daejeon 34122 (KR)**
• **PARK, Jung Won**
 **Daejeon 34122 (KR)**
• **PARK, Je Seob**
 **Daejeon 34122 (KR)**
• **YEO, Soo Jung**
 **Daejeon 34122 (KR)**
• **OH, Myoung Hwan**
 **Daejeon 34122 (KR)**
• **KWAK, Ho Young**
 **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, AND CATHODE AND LITHIUM SECONDARY BATTERY COMPRISING SAME**

(57) The present invention relates to a positive electrode active material including lithium transition metal oxide particles in a form of a single particle, wherein the lithium transition metal oxide has an average sphericity according to Equation 1 described in the present specification of 0.7 or more, and, when an electrode including the lithium transition metal oxide is rolled such that porosity is 20%, the average sphericity according to Equation 1 described in the present specification is 0.7 or more, and a positive electrode and a lithium secondary battery which include the same.

[FIG. 1]

EP 4 657 569 A1

## Description

## TECHNICAL FIELD

Cross-reference to Related Applications

This application claims priority from Korean Patent Application No. 10-2023-0043516, filed on April 3, 2023, the disclosure of which is incorporated by reference herein.

Technical Field

The present invention relates to a positive electrode active material for a lithium secondary battery, and a positive electrode and a lithium secondary battery which include the same.

## BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), nickel-based lithium transition metal oxide, lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because it has an advantage of high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel-based lithium transition metal oxide, in which a portion of cobalt (Co) is substituted with nickel (Ni) or the like, represented by a nickel cobalt manganese-based lithium transition metal oxide has been developed.

The conventionally developed nickel-based lithium transition metal oxide is in a form of a secondary particle in which fine primary particles having a micro average particle diameter ($D_{50}$) are aggregated, wherein it has a large surface area and low particle strength. Thus, in a case in which an electrode is prepared with a positive electrode active material including secondary particles, in which fine primary particles are aggregated, and then rolled, there has been a problem in that an amount of gas generated during cell operation is large due to severe particle cracking and stability is poor. Particularly, with respect to a high nickel-based (high-Ni) lithium transition metal oxide in which an amount of nickel (Ni) is increased to ensure high capacity, chemical stability is further reduced due to the structural problem described above, and it is also difficult to secure thermal stability.

In order to improve the disadvantages of the above-described conventional nickel-based lithium transition metal oxide in the form of a secondary particle in which the fine primary particles are aggregated, a nickel-based lithium transition metal oxide positive electrode active material in a form of a secondary particle, in which macro primary particles having a large average particle diameter ($D_{50}$) are aggregated, has been proposed.

Since the nickel-based lithium transition metal oxide positive electrode active material in the form of a secondary particle, in which the macro primary particles are aggregated, minimizes an interface between the secondary particles, problems, such as thermal stability, lifetime degradation due to a side reaction during an electrochemical reaction, and gas generation, are improved.

A high-Ni lithium transition metal oxide positive electrode active material typically undergoes a washing process to reduce an amount of lithium impurities remaining on a surface. The washing process is advantageous in reducing the gas generation because it removes a lithium by-product on the surface, but it is disadvantageous in terms of lifetime due to surface damage to the positive electrode active material particles. Particularly, the nickel-based lithium transition metal oxide positive electrode active material in the form of a secondary particle, in which the micro primary particles are aggregated, inherently has a problem with poor life characteristics, wherein, if it undergoes the washing process, the life characteristics are more degraded, and resistance is also increased as charge and discharge progress.

[Prior Art Documents]

[Patent Document]

(Patent Document 1) Korean Patent Application Laid-open Publication No. 10-2014-0093529

## DISCLOSURE OF THE INVENTION

### TECHNICAL PROBLEM

An object of the present invention is to provide a lithium secondary battery with reduced gas generation amount and improved energy density by developing a positive electrode active material with a single particle form and suppressed particle cracking.

### TECHNICAL SOLUTION

In order to solve the above-described tasks, the present invention provides a positive electrode active material, a positive electrode, and a lithium secondary battery.

(1) The present invention provides a positive electrode active material including lithium transition metal oxide particles in a form of a single particle, wherein the lithium transition metal oxide has an average sphericity according to Equation 1 of 0.7 or more, and, when an electrode including the lithium transition metal oxide is rolled such that porosity is 20%, the average sphericity according to Equation 1 is 0.7 or more.

$$[Equation\ 1]$$

$$Sphericity = (4\pi A)/P^2$$

In Equation 1,

A is an area $[\mu m^2]$ of the lithium transition metal oxide particle, and
P is a perimeter $[\mu m]$ of the lithium transition metal oxide particle.

(2) The present invention provides the positive electrode active material of (1) above, wherein the lithium transition metal oxide has a ratio of the number of particles with the sphericity according to Equation 1 of 0.7 to 0.8 to the total number of lithium transition metal oxide particles of 42% or more.

(3) The present invention provides the positive electrode active material of (1) or (2) above, wherein the lithium transition metal oxide has a ratio of the number of particles with the sphericity according to Equation 1 of 0.8 to 0.9 to the total number of lithium transition metal oxide particles of 10% or more.

(4) The present invention provides the positive electrode active material of any one of (1) to (3) above, wherein, when the electrode including the lithium transition metal oxide is rolled such that the porosity is 20%, the lithium transition metal oxide has a ratio of the number of particles with the sphericity according to Equation 1 of 0.7 to 0.8 to the total number of lithium transition metal oxide particles included in the electrode of 40% or more.

(5) The present invention provides the positive electrode active material of any one of (1) to (4) above, wherein, when the electrode including the lithium transition metal oxide is rolled such that the porosity is 20%, the lithium transition metal oxide has a ratio of the number of particles with the sphericity according to Equation 1 of 0.8 to 0.9 to the total number of lithium transition metal oxide particles included in the electrode of 15% or more.

(6) The present invention provides the positive electrode active material of any one of (1) to (5) above, wherein the lithium transition metal oxide has an average particle diameter ($D_{50}$) of 1.5 $\mu m$ to 6 $\mu m$.

(7) The present invention provides the positive electrode active material of any one of (1) to (6) above, wherein the lithium transition metal oxide is represented by Formula 1.

[Formula 1]          $Li\ (Ni_{1-x-y-z}Co_xMn_yM_z)O_2$

In Formula 1, M is at least one selected from the group consisting of aluminum (Al), iron (Fe), vanadium (V), chromium (Cr), titanium (Ti), tantalum (Ta), magnesium (Mg), and molybdenum (Mo), and x, y, and z are atomic fractions of independent elements, respectively, wherein $0<x\leq0.25$, $0<y\leq0.25$, $0\leq z<0.1$, and $0<x+y+z\leq0.5$.

(8) The present invention provides a positive electrode including the positive electrode active material of any one of (1) to (7) above.

(9) The present invention provides a lithium secondary battery including the positive electrode of (8) above.

## ADVANTAGEOUS EFFECTS

Since a positive electrode active material in a form of a single particle, which is prepared according to the present invention, has high sphericity and degree of single-particle formation, it reduces a phenomenon of fine particle generation due to particle cracking and reduces a phenomenon of gas generation of a battery when used as a positive electrode active material in the lithium secondary battery, and thus, it may significantly improve battery lifetime.

## BRIEF DESCRIPTION OF THE DRAWINGS

FIG. 1 is a segmentation image of a cross section of a positive electrode including a positive electrode active material prepared in Example 1.

FIG. 2 is a segmentation image of a cross section of a positive electrode including a positive electrode active material prepared in Example 2.

FIG. 3 is a segmentation image of a cross section of a positive electrode including a positive electrode active material prepared in Comparative Example 1.

FIG. 4 is a graph illustrating a ratio [%] of the number of particles according to sphericity according to Equation 1 described in the present specification to the total number of lithium transition metal oxide particles for the positive electrode active materials prepared in Example 1, Example 2, and Comparative Example 1.

FIG. 5 is a graph illustrating a ratio [%] of the number of particles according to the sphericity according to Equation 1 described in the present specification to the total number of lithium transition metal oxide particles included in an electrode, when the electrode including the lithium transition metal oxide is rolled such that porosity is 20%, for the positive electrode active materials prepared in Example 1, Example 2, and Comparative Example 1.

FIGS. 6(A) and 6(B) are scanning electron microscope (SEM) images of the positive electrode active materials prepared in Example 1 and Comparative Example 1, respectively.

FIGS. 7(A) to 7(C) are SEM images of the positive electrode active materials prepared in Example 1, Example 2, and Comparative Example 1, respectively.

FIG. 8 is a graph of gas generation amounts (ml) according to time (weeks) of batteries including the positive electrode active materials prepared in Example 1, Example 2, and Comparative Example 1.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present invention will be described in detail.

In the present invention, the expression "primary particle" denotes a smallest particle unit which is distinguished as one body when a cross section of a positive electrode active material is observed through a scanning electron microscope (SEM), wherein it may be composed of one crystallite or a plurality of crystallites. In the present invention, an average particle diameter ($Dv_{50}$) of the primary particle may be measured using a scanning electron microscope (SEM) (JEOL Ltd., JSM-7900F). Specifically, the average particle diameter may be defined as a particle diameter at a cumulative volume of 50% in a particle size distribution curve (graph curve of particle size distribution) of each particle obtained using the scanning electron microscope (SEM). After a volume of a sphere whose radius is half the particle diameter of the primary particle, which is obtained using the scanning electron microscope (SEM), is set as a volume of the primary particle, the average particle diameter may be measured by calculating a particle diameter at 50% of the cumulative distribution of volume according to the particle diameter in a result of calculating the volume of the primary particle. In the present invention, the particle diameter of the primary particle may be calculated by calculating an area of each primary particle through the number of pixels corresponding to each of the n primary particles present in an SEM image, and calculating a particle diameter of each primary particle present in the SEM image using a radius of a circle having the same area as each primary particle.

In the present invention, a "single particle" is a term used to distinguish from a positive electrode active material particle in a form of a secondary particle formed by aggregation of tens to hundreds of primary particles which has been conventionally commonly used, wherein it is a concept that includes a single particle composed of one primary particle and an aggregate particle of 50 or less primary particles.

In the present invention, an "average particle diameter ($D_{50}$)" may be defined as a particle diameter on the basis of 50% in a volume cumulative particle diameter distribution, and may be measured by using a laser diffraction method. Specifically, after dispersing target particles in a dispersion medium, the dispersion medium is introduced into a commercial laser diffraction particle size measurement instrument (e.g., Microtrac MT 3000) and irradiated with ultrasonic waves of about 28 kHz at an output of 60 W, and the average particle diameter $D_{50}$ based on 50% in a volume cumulative distribution according to the particle diameter in the measurement instrument may then be calculated.

In the present invention, a "degree of single-particle formation" is a value adjusted according to an average particle diameter ($Dv_{50}$) of primary particles constituting a single particle and an average particle diameter ($D_{50}$) of lithium transition metal oxide as a single particle, wherein the closer the average particle diameter ($Dv_{50}$) of the primary particles constituting the lithium transition metal oxide is to the average particle diameter ($D_{50}$) of the lithium transition metal oxide, the higher the degree of single-particle formation is.

In the present invention, a "single crystal" means a crystal in a state in which it does not include a grain boundary in the particle.

In the present invention, after a cross section of a positive electrode is obtained by cutting the positive electrode using an ion milling method by irradiating the positive electrode with an argon (Ar) ion beam using an ion milling device (JEOL Ltd., CP-09IB19520CCP, accelerating voltage: 6 kV) and a scanning electron microscope (SEM) image of the cross section of the positive electrode is taken, an "area of the lithium transition metal oxide particle" and a "perimeter of the lithium transition metal oxide particle" may be confirmed by image processing the image. Specifically, the area of the lithium transition metal oxide particle and the perimeter of the lithium transition metal oxide particle may be measured from a two-dimensional segmentation image divided by particle unit which is obtained by processing the image with an image processing program. After preparing a positive electrode including a positive electrode active material to be measured, a cross section of the positive electrode is obtained by cutting it using an ion milling method, a scanning electron microscope (SEM) image of the cross section is obtained, and the segmentation image may then be obtained by inputting the obtained scanning electron microscope image into a deep learning program to identify a plurality of objects included in the image and then segmenting the SEM image into particle units based on the plurality of objects. The "area of the lithium transition metal oxide particle" may be calculated using the number of pixels corresponding to each of n particles present in the segmentation image, and the "perimeter of the lithium transition metal oxide particle" may be calculated using a length of an outermost boundary corresponding to each of the n particles present in the segmentation image.

### Positive Electrode Active Material

Hereinafter, a positive electrode active material according to the present invention will be described.

The positive electrode active material of the present invention includes lithium transition metal oxide particles in a form of a single particle, wherein it is characterized in that the lithium transition metal oxide has an average sphericity according to Equation 1 below of 0.7 or more, and, when an electrode including the lithium transition metal oxide is rolled such that porosity is 20%, the average sphericity according to Equation 1 below is 0.7 or more.

$$[\text{Equation 1}]$$

$$\text{Sphericity} = (4\pi A)/P^2$$

In Equation 1,

A is an area [$\mu m^2$] of the lithium transition metal oxide particle, and
P is a perimeter [$\mu m$] of the lithium transition metal oxide particle.

The lithium transition metal oxide is in the form of a single particle composed of 50 or less primary particles. That is, the lithium transition metal oxide is a single particle or in the form of a single particle in which 2 to 50 particles are aggregated. Specifically, the lithium transition metal oxide may be in the form of a single particle composed of 2 to 40 primary particles, 2 to 30 primary particles, 2 to 20 primary particles, and 2 to 10 primary particles, and may preferably be in the form of a single particle composed of 2 to 10 primary particles. The form of a single particle is distinct from a secondary particle in which more than 50 primary particles are aggregated.

With respect to a lithium transition metal oxide which is a secondary particle, particle cracking easily occurs during an electrode rolling process, and, as a result, since a specific surface area of the active material is increased, degradation of storage and lifetime performance at high temperatures is intensified. Particularly, with respect to a lithium metal oxide including a high content of nickel, a problem of occurrence of a particle cracking phenomenon during rolling for the preparation of a positive electrode occurs more, and, in this case, a side reaction between the lithium metal oxide and an electrolyte solution may be increased, and physical properties of a secondary battery may be deteriorated.

In the present invention, the problems occurring in the lithium transition metal oxide in the form of a secondary particle as described above are improved by developing the lithium transition metal oxide in the form of a single particle. Particularly, the positive electrode active material in the form of a single particle show a significant difference in performance depending on a shape of each particle, particularly, sphericity. For example, the more spherical the single particle is, the more it may suppress particle cracking when the single particle is rolled during the preparation of the electrode. Accordingly, since the lithium transition metal oxide particles included in the positive electrode active material of the present invention have a high level of sphericity, the particle cracking phenomenon is suppressed while having the form of a single particle, and thus, excellent high-temperature life characteristics and high-temperature storage performance may be achieved when used in a lithium secondary battery.

Specifically, in the present invention, a concept of sphericity of the lithium transition metal oxide is used to evaluate and quantitatively express a degree of particle cracking before and after rolling of the lithium transition metal oxide. The sphericity defined in the present invention is a concept used to check how close the lithium transition metal oxide particle is to a shape of a sphere, wherein it is calculated through Equation 1 below.

$$[\text{Equation 1}]$$

$$\text{Sphericity} = (4\pi A)/P^2$$

In Equation 1,

A is an area [$\mu m^2$] of the lithium transition metal oxide particle, and
P is a perimeter [$\mu m$] of the lithium transition metal oxide particle.

The sphericity according to Equation 1 above may be evaluated from the perimeter and area of the particle which may be calculated from a cross section of the lithium transition metal oxide particle.

Specifically, after an electrode (positive electrode), which includes the positive electrode active material including the lithium transition metal oxide particles, is prepared, the positive electrode is cut by an ion milling method to obtain a cross section of the positive electrode, an SEM image of the cross section of the positive electrode is obtained using an SEM, and the sphericity may be calculated from an area of the lithium transition metal oxide particle and a perimeter of the particle which are calculated using an image processing program.

In a case in which the lithium transition metal oxide particle has a perfect spherical shape, the sphericity according to Equation 1 is 1, and, in a case in which it deviates from the spherical shape, since the perimeter of the particle relative to the area of the particle becomes longer, a value of the sphericity becomes less than 1. That is, the value of the sphericity may be greater than 0 and equal to or less than 1, and the closer the sphericity is to 1, the closer the shape of the particle is to a spherical shape.

The lithium transition metal oxide included in the positive electrode active material of the present invention has an average sphericity according to Equation 1 of 0.7 or more, and, when the electrode including the lithium transition metal oxide is rolled such that porosity is 20%, the average sphericity according to Equation 1 is 0.7 or more.

In the present invention, the lithium transition metal oxide has an average sphericity calculated according to Equation 1 of 0.7 or more. Specifically, the average sphericity may be 0.7 or more, 0.71 or more, 0.72 or more, 0.73 or more, 0.74 or more, or 0.75 or more, and may be 0.8 or less, 0.9 or less, or 1 or less. This means that, since the sphericity values of the lithium transition metal oxide particles are overall high regardless of the rolling, their average is high, and, since the positive electrode active material of the present invention is prepared through a solid-phase synthesis method, its sintering temperature may be reduced in comparison to a positive electrode active material that is prepared by oversintering using a conventional precursor. If the sintering temperature is high, since a grinding process is performed at a high pressure after sintering, the particle cracking phenomenon is increased and the sphericity is reduced. Also, the positive electrode active material using the precursor, which is prepared by the oversintering, has low sphericity due to aggregation in a portion where partial temperature deviation occurs. However, in the present invention, since the particles are formed and grown using raw material powders rather than a precursor, a low sintering temperature is used and the grinding pressure is low, and thus, the sphericity is high.

Also, when the electrode including the lithium transition metal oxide is rolled such that porosity is 20%, the lithium transition metal oxide has an average sphericity according to Equation 1 of 0.7 or more. Specifically, the average sphericity may be 0.7 or more, 0.71 or more, 0.72 or more, 0.73 or more, or 0.74 or more, and may be 0.8 or less, 0.9 or less, or 1 or less.

The porosity (20%) is calculated using a ratio of electrode density to true density of a total solid content of the positive electrode active material.

Specifically, the prepared positive electrode active material, a carbon black conductive agent, and a PVdF binder were mixed in an N-methylpyrrolidone solvent at a weight ratio of 95:2:3 to prepare a positive electrode material mixture (viscosity: 5,000 mPa·S), the positive electrode material mixture was applied to one surface of an aluminum current collector and then dried at 130°C to prepare a positive electrode. In this case, a porosity of a positive electrode active material layer in the positive electrode was 30% or more, and the porosity of the positive electrode active material layer was adjusted by rolling to a thickness that satisfies a porosity calculated by Equation 1 below.

$$\text{Porosity (P)} = [(\text{true density (T) of the positive electrode active material layer} - \text{positive electrode density (D)})/\text{true density (T) of the positive electrode active material layer}] \times 100 \qquad [\text{Equation 1}]$$

After punching each positive electrode to a size of 14 pi (ø), mass and thickness of each punched positive electrode were measured and subtracted by mass and thickness of the aluminum current collector to be used as mass (M) and thickness (H) of the positive electrode active material layer.

The positive electrode density (D) was obtained by dividing the mass (M) of the positive electrode active material layer by (positive electrode area (S) $\times$ the thickness (H) of the positive electrode active material layer) ($D=M/(S \times H)$).

The true density (T) of each positive electrode active material layer was obtained as a total sum of a ratio of each component of the positive electrode material mixture $\times$ true density of each component ($T = [(0.95 \times$ true density of the positive electrode active material) + ($0.02 \times$ true density of the carbon black conductive agent) + ($0.03 \times$ true density of the PVDF binder)]).

That the average sphericity according to Equation 1 is 0.7 or more when the electrode including the lithium transition metal oxide is rolled such that the porosity is 20% indicates that the decrease in sphericity due to the particle cracking after the rolling of the lithium transition metal oxide is large, wherein the positive electrode active material of the present invention may suppress the side reaction with the electrolyte solution by suppressing the particle cracking as described above and reducing an amount of lithium by-product. Also, the positive electrode active material of the present invention may achieve excellent physical properties, such as high-temperature life characteristics and storage performance, in the lithium secondary battery.

As described above, the positive electrode active material of the present invention was evaluated by the sphericity when the electrode including the lithium transition metal oxide was rolled such that the porosity was 20%, wherein, since the pressure level was similar to a rolling pressure level during the preparation of the positive electrode, it may be understood as a clearer standard for evaluating the particle cracking phenomenon when used in the lithium secondary battery.

In the present invention, a ratio ($S_{x,y}$) of the number of particles with a constant value (y) of the sphericity according to Equation 1 to the total number of lithium transition metal oxide particles is defined. It is a concept representing the number of particles with a certain sphericity value relative to the total number of particles of the lithium transition metal oxide included in the positive electrode active material of the present invention. More specifically, it may represent the number of particles with a certain sphericity value when the number of lithium transition metal oxide particles included in the electrode during the preparation of the electrode using the positive electrode active material is taken as the total number of particles.

In the present invention, the lithium transition metal oxide may have a ratio of the number of particles with the sphericity according to Equation 1 of 0.7 to 0.8 to the total number of lithium transition metal oxide particles of 42% or more, and more particularly, the ratio may be 42% or more, 42.5% or more, 43.0% or more, or 43.8% or more, and may be 70% or less, 60% or less, 50% or less, or 45% or less.

In the present invention, the lithium transition metal oxide may have a ratio of the number of particles with the sphericity according to Equation 1 of 0.8 to 0.9 to the total number of lithium transition metal oxide particles of 10% or more, and more specifically, the ratio may be 10% or more, 15% or more, 20% or more, 25% or more, or 30% or more, and may be 70% or less, 60% or less, 50% or less, or 40% or less.

In a case in which the lithium transition metal oxide has a sphericity in the above range, there is an advantage in that lifetime of the positive electrode active material is improved due to less particle cracking during the rolling process of preparing the electrode and gas generation is reduced by suppressing the side reaction with the electrolyte solution during cell operation.

In the present invention, when the electrode including the lithium transition metal oxide is rolled such that the porosity is 20%, the lithium transition metal oxide may have a ratio of the number of particles with the sphericity according to Equation 1 of 0.7 to 0.8 to the total number of lithium transition metal oxide particles included in the electrode of 40% or more, and more particularly, the ratio may be 40% or more, 41% or more, 42% or more, or 42.5% or more, and may be 70% or less, 60% or less, or 55% or less.

In the present invention, when the electrode including the lithium transition metal oxide is rolled such that the porosity is 20%, the lithium transition metal oxide may have a ratio of the number of particles with the sphericity according to Equation 1 of 0.8 to 0.9 to the total number of lithium transition metal oxide particles included in the electrode of 15% or more, and more particularly, the ratio may be 15% or more, 16% or more, 20% or more, or 25% or more, and may be 70% or less, 60% or less, 50% or less, or 40% or less.

The fact that the sphericity is significantly increased to a lower range after the electrode rolling process may be interpreted as the occurrence of the particle cracking. Since the positive electrode active material in the form of a single particle of the present invention shows no significant change in sphericity value even after the rolling process, it may be understood that the particle cracking is suppressed.

In the present invention, an average particle diameter ($D_{50}$) of the lithium transition metal oxide may be in a range of 1.5 $\mu$m to 6 $\mu$m, may specifically be 2 $\mu$m or more, 3 $\mu$m or more, or 3.5 $\mu$m or more, and may be 6 $\mu$m or less, 5 $\mu$m or less, or 4.5 $\mu$m or less.

Since the positive electrode active material of the present invention is in the form of a single particle, it has an advantage of reducing the gas generation and suppressing the particle cracking in comparison to a conventional secondary particle in which primary particles are aggregated. Also, since the average particle diameter of the lithium transition metal oxide is within the above range, gas generation and side reaction due to an increase in specific surface area may be reduced and degradation of the positive electrode active material may be prevented. Furthermore, reduction of capacity, which occurs when a size of the lithium transition metal oxide is increased beyond an appropriate level, may be suppressed.

In the present invention, an average particle diameter ($Dv_{50}$) of the primary particle may be 1.5 $\mu$m or more, may specifically be 2 $\mu$m or more, 3 $\mu$m or more, or 3.5 $\mu$m or more, and may be 6 $\mu$m or less, 5 $\mu$m or less, or 4.5 $\mu$m or less.

Since the lithium transition metal oxide included in the positive electrode active material of the present invention is composed of the primary particles having an average particle diameter ($Dv_{50}$) in the above range, it may suppress the particle cracking during rolling due to an increase in particle strength, may improve rolling density, and may reduce an amount of gas generated by the side reaction with the electrolyte solution because the lithium by-product is reduced.

In the present invention, the lithium transition metal oxide may be represented by Formula 1 below.

$$[\text{Formula 1}] \qquad \text{Li}(\text{Ni}_{1-x-y-z}\text{Co}_x\text{Mn}_y\text{M}_z)\text{O}_2$$

In Formula 1,

M is at least one selected from the group consisting of aluminum (Al), iron (Fe), vanadium (V), chromium (Cr), titanium (Ti), tantalum (Ta), magnesium (Mg), and molybdenum (Mo), and
x, y, and z are atomic fractions of independent elements, respectively, wherein $0<x\leq0.25$, $0<y\leq0.25$, $0\leq z<0.1$, and $0<x+y+z\leq0.5$.
M is an element substituted at a transition metal site in the oxide represented by Formula 1, and may include at least one selected from the group consisting of Al, Fe, V, Cr, Ti, Ta, Mg, and Mo.
1-x-y-z represents a molar ratio of nickel among metallic components excluding lithium in the lithium transition metal oxide represented by Formula 1, wherein 1-x-y-z may satisfy $0.5\leq1-x-y-z<1$, preferably, $0.8\leq1-x-y-z\leq0.95$.
x represents a molar ratio of cobalt among the metallic components excluding lithium in the lithium transition metal oxide represented by Formula 1, wherein x may satisfy $0<x\leq0.25$, preferably, $0.025\leq x\leq0.1$.
y represents a molar ratio of manganese among the metallic components excluding lithium in the lithium transition metal oxide represented by Formula 1, wherein y may satisfy $0<y\leq0.25$, preferably, $0.005\leq x\leq0.1$.
z represents a molar ratio of M among the metallic components excluding lithium in the lithium transition metal oxide represented by Formula 1, wherein z may satisfy $0\leq z<0.1$, preferably, $0\leq z\leq0.02$.

Also, the positive electrode active material may include a coating layer formed on a surface thereof, and the coating layer may preferably include B (boron).

Since the coating layer blocks a contact between the positive electrode active material and the electrolyte solution contained in the lithium secondary battery to suppress the occurrence of the side reaction, it may further improve life characteristics and may additionally increase packing density of the positive electrode active material.

The coating layer may be formed on the entire surface of the positive electrode active material, or may be partially formed. Specifically, in a case in which the coating layer is partially formed on the surface of the positive electrode active material, the coating layer may be formed in 20% or more to less than 100% of a total specific surface area of the positive electrode active material. In a case in which the specific surface area of the coating layer is less than 20%, effects of improving the life characteristics and improving the packing density due to the formation of the coating layer may be insignificant.

Furthermore, the positive electrode active material of the present invention may be prepared through the steps of: (S1) preparing a solid-phase raw material mixture including lithium raw material powder, nickel raw material powder, cobalt raw material powder, and manganese raw material powder such that a molar ratio of lithium to total transition metals is in a range of 0.90 to 1.10; (S2) performing primary sintering on the solid-phase raw material mixture and grinding to prepare a primary sintered product; and (S3) mixing lithium raw material powder with the primary sintered product such that a total molar ratio of lithium to total transition metals is in a range of 0.95 to 1.10 and performing secondary sintering.

In the above method, temperature of the secondary sintering may be in a range of 500°C to 900°C, 600°C to 850°C, or 700°C to 800°C.

Also, in step (S1), the solid-phase raw material mixture may further include M raw material powder (where M is at least one selected from the group consisting of Al, Fe, V, Cr, Ti, Ta, Mg, and Mo).

The lithium transition metal oxide of the present invention is prepared through a solid-phase synthesis method using the solid-phase raw material mixture, wherein the solid-phase synthesis method has an advantage of being able to mass-produce the lithium transition metal oxide through a relatively simple synthesis process and is particularly advantageous for preparing high-nickel NCM with a high nickel content.

Also, since raw material particles are allowed to have a smaller size and are uniformly mixed by grinding and mixing processes, the particles grow smoothly at a lower temperature, and thus, an excellent degree of single-particle formation and sphericity may be exhibited.

In contrast, in a case in which a process of first preparing a positive electrode active material precursor and then using it to prepare a single-particle positive electrode active material slurry is used, that is, since single-particle formation may not proceed sufficiently due to non-smooth particle growth and an oversintering process is required, it may cause a reduction in capacity when using the battery for reasons such as formation of a rock-salt phase. Furthermore, since a precursor-based secondary particle form coexists, the sphericity and degree of single-particle formation may not be achieved to the extent desired by the present invention.

In the present invention, as the lithium raw material powder, for example, lithium-containing carbonates (e.g., lithium carbonate, etc.), lithium-containing hydrates (e.g., lithium hydroxide hydrate ($LiOH \cdot H_2O$), etc.), lithium-containing hydroxides (e.g., lithium hydroxide, etc.), lithium-containing nitrates (e.g., lithium nitrate ($LiNO_3$), etc.), lithium-containing chlorides (e.g., lithium chloride (LiCl), etc.) may be used. Preferably, at least one selected from the group consisting of lithium hydroxide, lithium hydroxide hydrate, and lithium carbonate may be used as the first lithium raw material.

In the present invention, the nickel raw material powder means raw material powder containing only nickel to provide the nickel as a transition metal. The nickel raw material powder may be at least one selected from the group consisting of nickel oxide, nickel carbonate, nickel sulfate, nickel hydroxide, nickel phosphate, and nickel nitrate.

The cobalt raw material powder may be at least one selected from the group consisting of cobalt oxide, cobalt carbonate, cobalt sulfate, cobalt hydroxide, and cobalt phosphate.

The manganese raw material powder may be at least one selected from the group consisting of manganese dioxide, manganese carbonate, manganese sulfate, and manganese nitrate.

In the solid-phase raw material mixture prepared in step (S1), the lithium raw material powder, the nickel raw material powder, the cobalt raw material powder, and the manganese raw material powder are mixed in amounts such that a molar ratio of lithium to total transition metals is in a range of 0.90 to 1.10.

If the molar ratio of the lithium is less than 0.90, problems may occur in the formation of a composite transition metal phase according to solid-phase synthesis, and the lack of lithium may reduce discharge efficiency and may significantly increase surface resistance, and, if the mixing molar ratio is greater than 1.10, problems may occur in which residual lithium is increased and performance of the positive electrode active material is degraded.

The molar ratio of the lithium may be a condition controlled to prepare a positive electrode active material which also has excellent performance because the residual lithium is not excessive, while being in the form of a single particle with a high degree of single-particle formation as in the present invention.

In the present invention, the solid-phase raw material mixture is subjected to primary sintering and then ground to prepare a primary sintered product.

The primary sintering may be performed at a temperature of 400°C to 900°C. When the temperature of the primary sintering is within the above range, an increase in unreacted residual lithium due to low reactivity between the lithium raw material powder and each of the transition metal raw material powders in the solid-phase raw material mixture, or a reduction in capacity and lifetime of the battery due to a lack of lithium in the positive electrode active material may be prevented. Also, the reduction in capacity and lifetime of the battery, which is caused by the degradation of the performance of the positive electrode active material due to local occurrence of an oversintering phenomenon caused by a non-uniform reaction during the primary sintering, may be prevented.

In the present invention, the solid-phase raw material mixture is subjected to primary sintering and then ground. Through the grinding, an average particle diameter ($D_{50}$) of the primary sintered product may be adjusted to a range of 2 $\mu$m to 4 $\mu$m, or 3 $\mu$m to 4 $\mu$m, and a maximum particle diameter (Dmax) may be adjusted to 30 $\mu$m or less, or 20 $\mu$m or less.

Through this grinding process, it is advantageous to prepare a positive electrode active material in the form of a single particle of a desired size, and a single particle having a uniform composition may be finally prepared.

The positive electrode active material of the present invention may be prepared through the step of mixing lithium raw material powder with the primary sintered product such that a total molar ratio of lithium to total transition metals is in a range of 0.95 to 1.10 and performing secondary sintering.

If the total molar ratio of the lithium to the transition metals after the mixing of the lithium raw material powder is less than 0.95, problems may occur in the formation of the composite transition metal phase according to the solid-phase synthesis, and the lack of lithium may reduce the discharge efficiency and may significantly increase the surface resistance, and, if the total molar ratio of the lithium is greater than 1.10, problems may occur in which the residual lithium is increased and the performance of the positive electrode active material is degraded.

Also, in order to prepare a positive electrode active material in the form of a single particle with high sphericity as in the present invention, the particles may be filled with a packing density of 0.7 cc/g or more during sintering. If the packing density is increased, since a distance between the particles is decreased during the sintering, particle reaction and growth may be facilitated. Furthermore, since an appropriate molar ratio of lithium has a flux effect, it may be induced to form a highly spherical shape even during sintering at a low temperature.

In the present invention, the temperature of the secondary sintering may be in a range of 500°C to 900°C, 600°C to 850°C, or 700°C to 800°C. Also, secondary sintering time may be in a range of 3 hours to 15 hours or 5 hours to 12 hours.

Since the secondary sintering is performed within the above range, insufficient particle growth during the primary sintering may be compensated by supplementing an additional lithium raw material depending on heat energy and circumstances and fine particles generated during the grinding process may be grown and absorbed to prepare a positive electrode active material having an appropriate particle size and a low particle crack rate.

In the present invention, the sintering may be performed in an oxygen or air atmosphere. In a case in which the sintering is performed in the above atmosphere, since a local oxygen partial pressure is increased, crystallinity of the positive electrode active material is improved and control of a surface phase is facilitated. In contrast, in a case in which the sintering is performed in an inert gas atmosphere or a non-oxidizing atmosphere other than the above-described atmosphere, the control of the phase present on the surface becomes difficult because the crystallinity is reduced due to oxygen desorption during the sintering and the surface phase is formed non-uniformly.

Additionally, the present invention may further include a step of forming a coating layer. Preferably, the coating layer may include an element such as B or cobalt (Co), but the present invention is not limited thereto.

For example, the coating element may form a coating layer on the surface of the positive electrode active material through a heat treatment.

The heat treatment for the formation of the coating layer may be performed in a temperature range suitable for applying a coating material to the surface of the positive electrode active material, and may specifically be performed in a temperature range of 100°C to 800°C.

Also, the present invention provides a positive electrode for a lithium secondary battery which includes the positive electrode active material.

Specifically, the positive electrode includes a positive electrode collector, and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder together with the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive agent are the same as those previously described.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the positive electrode material mixture on a separate support and then laminating a film separated from the support on the positive electrode collector.

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\mu(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## Examples and Comparative Examples

Hereinafter, the present invention will be described in more detail according to examples. However, the following examples are merely presented to exemplify the present invention, and the scope of the present invention is not limited thereto.

## Example 1

Lithium (Li), nickel (Ni), Co, manganese (Mn), and Al raw materials were added to a mixer in amounts such that a molar ratio of Li:Ni:Co:Mn:Al was 0.97:0.93:0.05:0.01:0.01, and were mixed and ground using high-energy milling equipment. In this case, $LiOH \cdot H_2O$, $Ni(OH)_2$, $Co_3O_4$, $MnO_2$, and $Al_3O_4$ were used as the raw materials.

The mixed and ground raw materials were filled into a crucible at a density of 0.7 g/cc or more, and, after primary sintering was performed at 810°C for 10 hours in an oxygen atmosphere, a primary sintered product thus obtained was ground using a pneumatic grinder. In this case, a size of the primary sintered product was adjusted such that $D_{50}$ was in a range of 2 $\mu$m to 4 $\mu$m and $D_{max} > 20$ $\mu$m.

After mixing the ground primary sintered product with $LiOH \cdot H_2O$ such that a molar ratio of lithium to transition metals was 1.00, the mixture was secondarily sintered at 750° C for 5 hours, and then disintegrated with a pneumatic grinder to prepare a positive electrode active material (lithium transition metal oxide).

## Example 2

A positive electrode active material (lithium transition metal oxide) was prepared in the same manner as in Example 1 except that the primary sintering was performed at a temperature of 830°C.

## Comparative Example 1

Nickel cobalt manganese hydroxide, Li raw material, and Al raw material were added to a mixer in amounts such that a molar ratio of Li:Ni:Co:Mn:Al was 0.97:0.93:0.05:0.01:0.01 and mixed. In this case, $LiOH \cdot H_2O$, $Ni_{0.94}Co_{0.05}Mn_{0.01}(OH)_2$, and $Al_2O_3$ were used as the raw materials.

The mixed raw materials were filled into a crucible at a density of 0.7 g/cc or more, and, after primary sintering was performed at 760°C for 12 hours in an oxygen atmosphere, a primary sintered product thus obtained was ground using a pneumatic grinder. In this case, a size of the primary sintered product was adjusted such that $D_{50}$ was in a range of 2 $\mu$m to 4 $\mu$m and $D_{max} > 20$ $\mu$m.

**Experimental Example 1**

**-Unrolling Condition**

After an electrode (positive electrode) including each of the positive electrode active materials prepared in the examples and the comparative example was prepared, the electrode was cut by an ion milling method to obtain a cross section of the positive electrode, an SEM image (about 5K magnification) of the cross section of the positive electrode was obtained using an SEM (JEOL Ltd., JSM-7900F), areas and perimeters of the lithium transition metal oxide particles prepared in the examples and the comparative example were checked by using an image processing program, and sphericity was calculated and presented in Tables 1 to 3 below.

Specifically, after 95 wt% of each of the positive electrode active materials prepared in the examples and the comparative example, 2.0 wt% of carbon black as a conductive agent, and 3.0 wt% of polyvinylidene fluoride (PVDF), as a binder, were mixed in an N-methylpyrrolidone (NMP) solvent to prepare a positive electrode slurry, one surface of an aluminum current collector was coated with the above-prepared positive electrode slurry and then dried at 130°C to prepare a positive electrode.

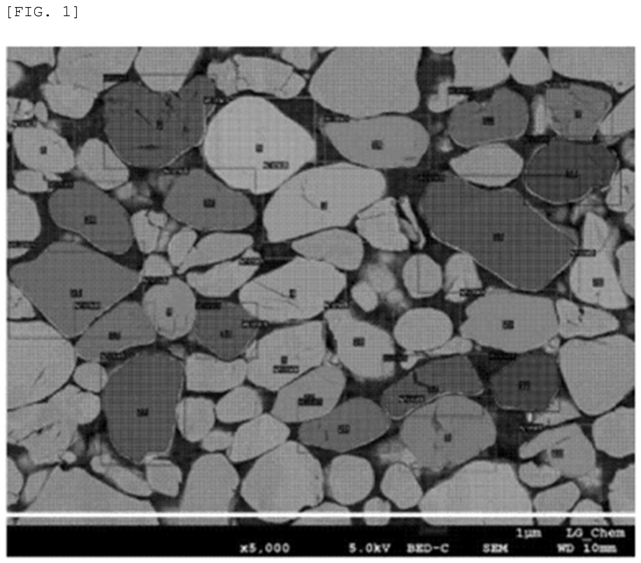

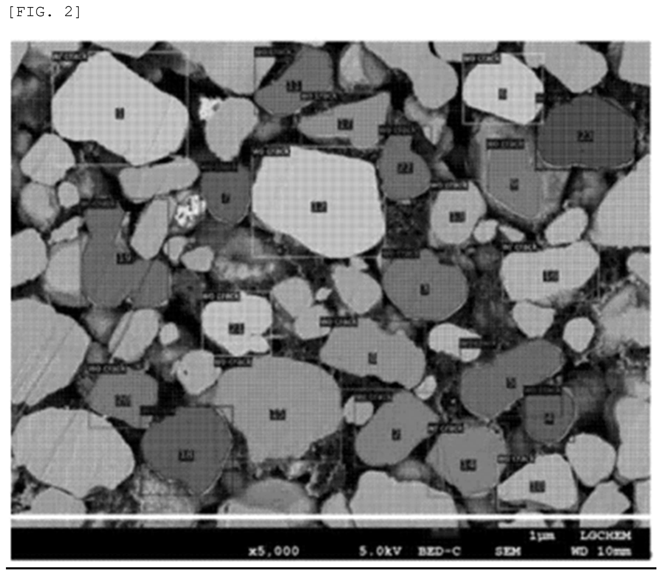

After a cross section of the positive electrode was obtained by cutting the positive electrode using an ion milling method by irradiating the positive electrode with an argon (Ar) ion beam using an ion milling device (JEOL Ltd., CP-09IB19520CCP, accelerating voltage: 6 kV), an SEM image (about 5K magnification) of the cross section of the positive electrode was taken by using an SEM (JEOL Ltd., JSM-7900F). Thereafter, a two-dimensional segmentation image displayed in random colors was obtained by dividing boundaries of the lithium transition metal oxide particles present in the SEM image using an image processing program (deep learning program, Mask-RCNN model), and presented in FIGS. 1 and 2.

For reference, an image processing operation includes a method of direct classification by a researcher and an image classification method through deep learning, and, in the present invention, the image classification method through deep learning was used, but the present invention is not limited thereto.

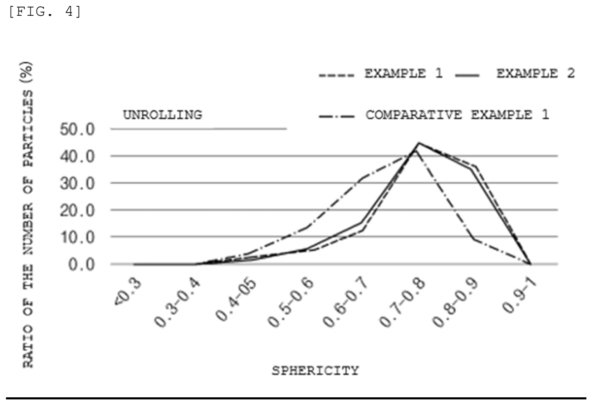

After an area of the lithium transition metal oxide particle was calculated using the number of pixels corresponding to each of n (about 100 to 200) particles present in the segmentation image and a perimeter of the lithium transition metal oxide particle was calculated using a length of an outermost boundary corresponding to each of the n (about 100 to 200) particles present in the segmentation image, the sphericity according to Equation 1 was calculated and average sphericity and a ratio ($S_{30\leq,y}$[%]) of the number of particles according to unrolling of each sphericity were calculated and presented in Tables 1 to 3 and FIG. 4 below.

However, particles captured in the resulting image which had an area of 3 $\mu m^2$ or less, or particles whose overall shape was not observed in the image were excluded because they may undermine the representativeness of the sample.

FIG. 1 is a segmentation image of a cross section of the positive electrode including the positive electrode active material prepared in Example 1.

FIG. 2 is a segmentation image of a cross section of the positive electrode including the positive electrode active material prepared in Example 2.

FIG. 4 is a graph illustrating a ratio [%] of the number of particles according to the sphericity according to Equation 1 to the total number of lithium transition metal oxide particles for the positive electrode active materials prepared in Example 1, Example 2, and Comparative Example 1.

**-Rolling Condition**

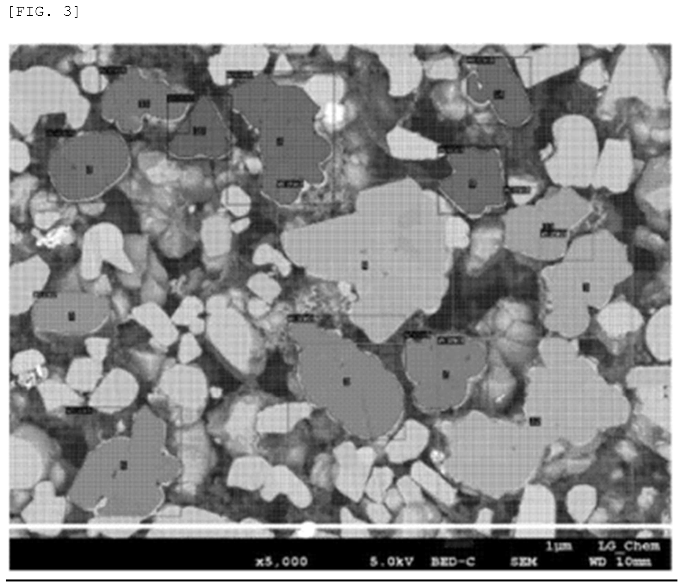

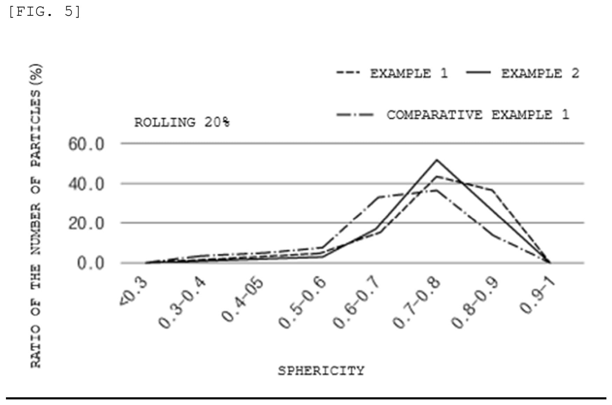

A two-dimensional segmentation image was obtained in the same manner as in the unrolling condition except that, after 95 wt% of each of the positive electrode active materials prepared in the examples and the comparative example, 2.0 wt% of carbon black as a conductive agent, and 3.0 wt% of polyvinylidene fluoride (PVDF), as a binder, were mixed in an N-methylpyrrolidone (NMP) solvent to prepare a positive electrode slurry, one surface of an aluminum current collector was coated with the above-prepared positive electrode slurry, dried at 130°C, and then rolled such that porosity was 20% to prepare a positive electrode, and presented in FIG. 3, and average sphericity and a ratio ($S_{20,y}$[%]) of the number of particles according to rolling (porosity: 20%), when the electrode including the lithium transition metal oxide was rolled such that the porosity was 20%, were calculated and presented in Tables 1 to 3 and FIG. 5 below.

FIG. 3 is a segmentation image of a cross section of the positive electrode including the positive electrode active material prepared in Comparative Example 1.

FIG. 5 is a graph illustrating a ratio [%] of the number of particles according to the sphericity according to Equation 1 described in the present specification to the total number of lithium transition metal oxide particles included in the electrode, when the electrode including the lithium transition metal oxide was rolled such that the porosity was 20%, for the positive electrode active materials prepared in Example 1, Example 2, and Comparative Example 1.

[Table 1]

| | | Example 1 | |
|---|---|---|---|
| | | Ratio ($S_{30\leq,y}$[%]) of the number of particles according to unrolling | Ratio ($S_{20,y}$[%]) of the number of particles according to rolling (porosity: 20%) |
| Sphericity | <0.3 | 0.0 | 0.0 |
| | 0.3-0.4 | 0.0 | 0.4 |
| | 0.4-0.5 | 1.5 | 1.8 |
| | 0.5-0.6 | 5.2 | 4.0 |
| | 0.6-0.7 | 13.4 | 15.4 |
| | 0.7-0.8 | 43.8 | 42.7 |
| | 0.8-0.9 | 36.1 | 35.7 |
| | 0.9-1.0 | 0.0 | 0.0 |
| The total number of particles [number] | | 194 | 227 |
| Average sphericity | | 0.7546 | 0.7501 |
| Standard deviation | | 0.0880 | 0.0894 |
| Dispersion | | 0.0077 | 0.0080 |

[Table 2]

| | | Example 2 | |
|---|---|---|---|
| | | Ratio ($S_{30\leq,y}$[%]) of the number of particles according to unrolling | Ratio ($S_{20,y}$[%]) of the number of particles according to rolling (porosity: 20%) |
| Sphericity | <0.3 | 0.0 | 0.0 |
| | 0.3-0.4 | 0.0 | 0.4 |
| | 0.4-0.5 | 1.1 | 1.7 |
| | 0.5-0.6 | 5.1 | 2.9 |
| | 0.6-0.7 | 15.2 | 18.3 |
| | 0.7-0.8 | 43.8 | 50.8 |
| | 0.8-0.9 | 34.8 | 25.8 |
| | 0.9-1.0 | 0.0 | 0.0 |
| The total number of particles [number] | | 178 | 240 |
| Average sphericity | | 0.7548 | 0.7465 |
| Standard deviation | | 0.0840 | 0.0851 |
| Dispersion | | 0.0071 | 0.0072 |

[Table 3]

| | | Comparative Example 1 | |
|---|---|---|---|
| | | Ratio ($S_{30\leq,y}$[%]) of the number of particles according to unrolling | Ratio ($S_{20,y}$[%]) of the number of particles according to rolling (porosity: 20%) |
| Sphericity | <0.3 | 0.0 | 1.5 |
| | 0.3-0.4 | 0.0 | 3.7 |
| | 0.4-0.5 | 4.1 | 4.4 |
| | 0.5-0.6 | 13.1 | 7.4 |
| | 0.6-0.7 | 32.0 | 32.6 |
| | 0.7-0.8 | 41.8 | 36.3 |
| | 0.8-0.9 | 9.0 | 14.1 |
| | 0.9-1.0 | 0.0 | 0.0 |
| The total number of particles [number] | | 122 | 135 |
| Average sphericity | | 0.6860 | 0.6790 |
| Standard deviation | | 0.0925 | 0.1269 |
| Dispersion | | 0.0085 | 0.0161 |

According to Tables 1 to 3, it was confirmed that the positive electrode active materials prepared in Examples 1 and 2 had the average sphericity according to Equation 1 described in the present specification of 0.70 or more, and had the average sphericity according to Equation 1 described in the present specification of 0.70 or more when the electrode including the lithium transition metal oxide was rolled such that porosity was 20%. Also, it was confirmed that the ratio ($S_{30\leq,0.7-0.8}$) of the number of particles with the sphericity according to Equation 1 described in the present specification of 0.7 to 0.8 to the total number of lithium transition metal oxide particles was 42% or more, the ratio ($S_{30\leq,0.8-0.9}$) of the number of particles with the sphericity according to Equation 1 of 0.8 to 0.9 to the total number of lithium transition metal oxide particles was 10% or more, and, when the electrode including the lithium transition metal oxide was rolled such that porosity was 20%, the ratio ($S_{20,0.7-0.8}$) of the number of particles with the sphericity according to Equation 1 of 0.7 to 0.8 to the total number of lithium transition metal oxide particles included in the electrode was 40% or more, and the ratio ($S_{20,0.8-0.9}$) of the number of particles with the sphericity according to Equation 1 of 0.8 to 0.9 to the total number of lithium transition metal oxide particles included in the electrode was 15% or more. In contrast, it was confirmed that the positive electrode active material prepared in Comparative Example 1 had the average sphericity according to Equation 1 described in the present specification of less than 0.70, and had the average sphericity according to Equation 1 described in the present specification of less than 0.70 when the electrode including the lithium transition metal oxide was rolled such that porosity was 20%. Furthermore, it was confirmed that the ratio ($S_{30\leq,0.7-0.8}$) of the number of particles with the sphericity according to Equation 1 described in the present specification of 0.7 to 0.8 to the total number of lithium transition metal oxide particles was less than 42%, the ratio ($S_{30\leq,0.8-0.9}$) of the number of particles with the sphericity according to Equation 1 of 0.8 to 0.9 to the total number of lithium transition metal oxide particles was less than 10%, and, when the electrode including the lithium transition metal oxide was rolled such that the porosity was 20%, the ratio ($S_{20,0.7-0.8}$) of the number of particles with the sphericity according to Equation 1 of 0.7 to 0.8 to the total number of lithium transition metal oxide particles included in the electrode was less than 40%, and the ratio ($S_{20,0.8-0.9}$) of the number of particles with the sphericity according to Equation 1 of 0.8 to 0.9 to the total number of lithium transition metal oxide particles included in the electrode was less than 15%.

**Experimental Example 2**

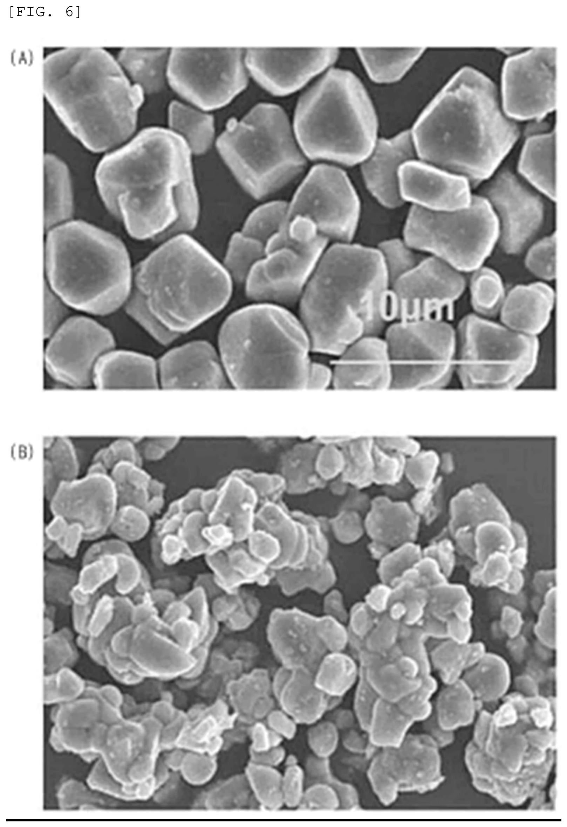

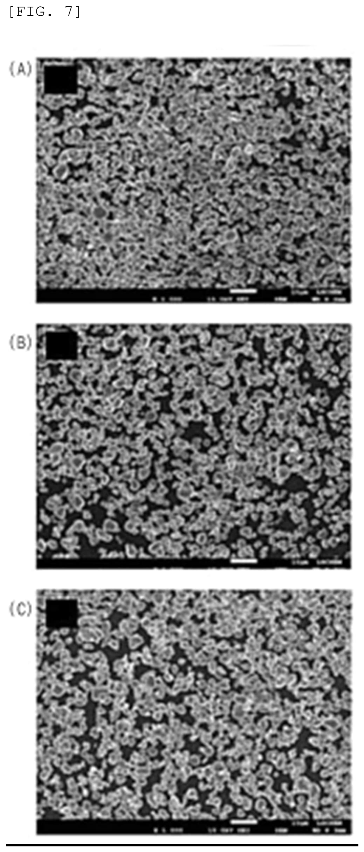

SEM images of the positive electrode active materials prepared in the examples and the comparative example were obtained using an SEM (JEOL Ltd., JSM-7900F), and presented in FIGS. 6 and 7.

FIGS. 6(A) and 6(B) are SEM images of the positive electrode active materials prepared in Example 1 and Comparative Example 1, respectively.

FIGS. 7(A) to 7(C) are SEM images of the positive electrode active materials prepared in Example 1, Example 2, and Comparative Example 1, respectively.

According to FIGS. 6 and 7, it was confirmed that the positive electrode active material prepared in Example 1 was in the form of a single particle with a high degree of single-particle formation, but the positive electrode active material prepared in Comparative Example 1 had a low degree of single-particle formation. Also, it was confirmed that the positive electrode active material prepared in Example 1 was in the form of a single particle which was composed of 2 to 10 primary particles, and, since the number of grain boundaries was less and a degree of sphericity was higher than that of the positive electrode active material prepared in Comparative Example 1, particle strength was high and little particle cracking occurred during electrode rolling.

**Experimental Example 3**

Each of the positive electrode active materials prepared in the examples or the comparative example, a conductive agent (Denka Black), and a binder (PVDF) were mixed in an N-methyl-2-pyrrolidone (NMP) solvent at a weight ratio of 95:2:3 to prepare a positive electrode slurry. An aluminum current collector was coated with the positive electrode slurry, dried, and then rolled to prepare a positive electrode.

Next, a negative electrode active material (natural graphite), a conductive agent (carbon black), and a binder (SBR+CMC) were mixed in water at a weight ratio of 95.6:1.0:3.4 to prepare a negative electrode slurry. A copper current collector was coated with the negative electrode slurry, dried, and then rolled to prepare a negative electrode.

After an electrode assembly was prepared by disposing a separator between the positive electrode and the negative electrode, the electrode assembly was disposed in a battery case, and an electrolyte solution was then injected to prepare two mono-cells each with an electrode size of 3 cm $\times$ 4 cm. In this case, as the electrolyte solution, an electrolyte solution, in which 0.7 M $LiPF_6$ and 0.3 M LiFSI were dissolved in an organic solvent in which ethylene carbonate:ethyl methyl carbonate were mixed in a volume ratio of 3:7, was used.

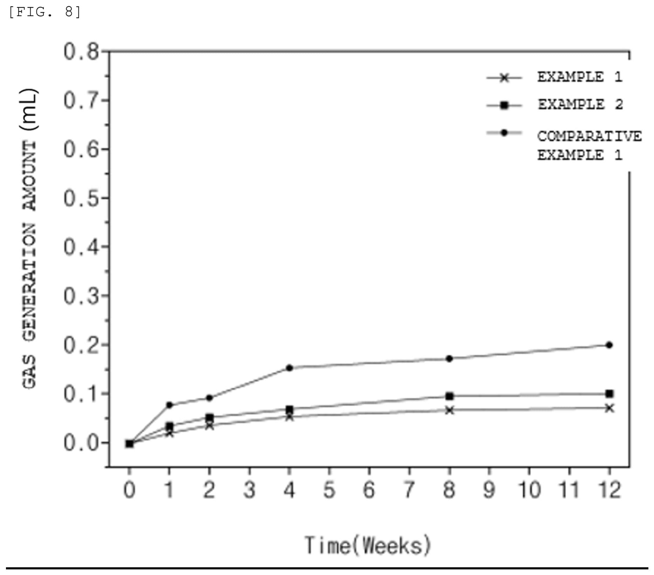

After the two mono-cells were 0.05 C cut-off charged at a constant current of 0.33 C to 4.2 V at 25°C, the positive electrodes were separated. The separated positive electrodes were put in a cell pouch, the electrolyte solution was additionally injected, and the cell pouch was then sealed to prepare a sample. An amount of gas generated was measured while the sample was stored at 60°C for 12 weeks, and the amount of gas generated at 12 weeks is presented in Table 4 and FIG. 8 below.

FIG. 8 is a graph of gas generation amounts (ml) according to time (weeks) of the batteries including the positive electrode active materials prepared in Example 1, Example 2, and Comparative Example 1.

[Table 4]

|  | Gas generation amount (mL) |
|---|---|
| Example 1 | 0.07 |
| Example 2 | 0.1 |
| Comparative Example 1 | 0.2 |

According to Table 4, it was confirmed that the secondary battery using the positive electrode active material according to the present invention had an excellent effect of reducing gas generation.

**Claims**

1. A positive electrode active material comprising lithium transition metal oxide particles in a form of a single particle,

wherein the lithium transition metal oxide has an average sphericity according to Equation 1 of 0.7 or more, and, when an electrode including the lithium transition metal oxide is rolled such that porosity is 20%, the average sphericity according to Equation 1 is 0.7 or more:

$$[Equation\ 1]$$

$$Sphericity = (4\pi A)/P^2$$

wherein, in Equation 1,
A is an area [$\mu m^2$] of the lithium transition metal oxide particle, and
P is a perimeter [$\mu m$] of the lithium transition metal oxide particle.

2. The positive electrode active material of claim 1, wherein the lithium transition metal oxide has a ratio of the number of particles with the sphericity according to Equation 1 of 0.7 to 0.8 to the total number of lithium transition metal oxide particles of 42% or more.

3. The positive electrode active material of claim 1, wherein the lithium transition metal oxide has a ratio of the number of particles with the sphericity according to Equation 1 of 0.8 to 0.9 to the total number of lithium transition metal oxide particles of 10% or more.

4. The positive electrode active material of claim 1, wherein, when the electrode including the lithium transition metal oxide is rolled such that the porosity is 20%, the lithium transition metal oxide has a ratio of the number of particles with the sphericity according to Equation 1 of 0.7 to 0.8 to the total number of lithium transition metal oxide particles included in the electrode of 40% or more.

5. The positive electrode active material of claim 1, wherein, when the electrode including the lithium transition metal oxide is rolled such that the porosity is 20%, the lithium transition metal oxide has a ratio of the number of particles with the sphericity according to Equation 1 of 0.8 to 0.9 to the total number of lithium transition metal oxide particles included in the electrode of 15% or more.

6. The positive electrode active material of claim 1, wherein the lithium transition metal oxide has an average particle diameter ($D_{50}$) of 1.5 $\mu$m to 6 $\mu$m.

7. The positive electrode active material of claim 1, wherein the lithium transition metal oxide is represented by Formula 1:

[Formula 1]   $Li(Ni_{1-x-y-z}Co_xMn_yM_z)O_2$

wherein, in Formula 1,

M is at least one selected from the group consisting of aluminum (Al), iron (Fe), vanadium (V), chromium (Cr), titanium (Ti), tantalum (Ta), magnesium (Mg), and molybdenum (Mo), and
x, y, and z are atomic fractions of independent elements, respectively, wherein $0<x\leq0.25$, $0<y\leq0.25$, $0\leq z<0.1$, and $0<x+y+z\leq0.5$.

8. A positive electrode for a lithium secondary battery, the positive electrode comprising the positive electrode active material of any one of claims 1 to 7.

9. A lithium secondary battery comprising the positive electrode for a lithium secondary battery of claim 8.

[FIG. 1]

[FIG. 2]

[FIG. 3]

[FIG. 4]

[FIG. 5]

[FIG. 6]

[FIG. 7]

(A)

(B)

(C)

[FIG. 8]

## INTERNATIONAL SEARCH REPORT

| International application No. |
| --- |
| **PCT/KR2024/004347** |

| A. | CLASSIFICATION OF SUBJECT MATTER |
| --- | --- |

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/0525(2010.01); H01M 4/131(2010.01); H01M 4/36(2006.01); H01M 4/505(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 단입자(single particle), 리튬 전이금속 산화물(lithium transition oxide), 공극률(porosity), 압연(press), 구형도(circularity)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0057539 A (SUMITOMO METAL MINING CO., LTD.) 09 May 2022 (2022-05-09) See claims 1 and 4; and paragraphs [0009], [0016]-[0017], [0030]-[0032], [0054]-[0058], [0060], [0071]-[0091] and [0162]. | 1-9 |
| Y | WO 2019-235885 A1 (LG CHEM, LTD.) 12 December 2019 (2019-12-12) See paragraphs [0036] and [0179]-[0181]; and table 1. | 1-9 |
| A | KR 10-2022-0041032 A (LG CHEM, LTD.) 31 March 2022 (2022-03-31) See paragraphs [0067]-[0072]. | 1-9 |
| A | WO 2022-138451 A1 (KABUSHIKI KAISHA TOSHIBA) 30 June 2022 (2022-06-30) See entire document. | 1-9 |
| A | CN 115004403 A (PANASONIC HOLDING CO., LTD.) 02 September 2022 (2022-09-02) See entire document. | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 July 2024** | **17 July 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 657 569 A1**

<table>
<tr><td colspan="2" align="center">INTERNATIONAL SEARCH REPORT<br>Information on patent family members</td><td colspan="2">International application No.<br><br>**PCT/KR2024/004347**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>KR    10-2022-0057539    A</td><td>09 May 2022</td><td>CN        114342119    A</td><td>12 April 2022</td></tr>
<tr><td></td><td></td><td>CN        114342121    A</td><td>12 April 2022</td></tr>
<tr><td></td><td></td><td>CN        114342122    A</td><td>12 April 2022</td></tr>
<tr><td></td><td></td><td>EP        4023603    A1</td><td>06 July 2022</td></tr>
<tr><td></td><td></td><td>EP        4023603    A4</td><td>06 December 2023</td></tr>
<tr><td></td><td></td><td>EP        4023604    A1</td><td>06 July 2022</td></tr>
<tr><td></td><td></td><td>EP        4023604    A4</td><td>06 December 2023</td></tr>
<tr><td></td><td></td><td>EP        4023605    A1</td><td>06 July 2022</td></tr>
<tr><td></td><td></td><td>EP        4023605    A4</td><td>27 September 2023</td></tr>
<tr><td></td><td></td><td>JP        2021-040031    A1</td><td>04 March 2021</td></tr>
<tr><td></td><td></td><td>JP        2021-040032    A1</td><td>04 March 2021</td></tr>
<tr><td></td><td></td><td>JP        2021-040033    A1</td><td>04 March 2021</td></tr>
<tr><td></td><td></td><td>KR  10-2022-0054804    A</td><td>03 May 2022</td></tr>
<tr><td></td><td></td><td>KR  10-2022-0057538    A</td><td>09 May 2022</td></tr>
<tr><td></td><td></td><td>US        2022-0285676    A1</td><td>08 September 2022</td></tr>
<tr><td></td><td></td><td>US        2022-0285679    A1</td><td>08 September 2022</td></tr>
<tr><td></td><td></td><td>US        2022-0293933    A1</td><td>15 September 2022</td></tr>
<tr><td></td><td></td><td>WO        2021-040031    A1</td><td>04 March 2021</td></tr>
<tr><td></td><td></td><td>WO        2021-040032    A1</td><td>04 March 2021</td></tr>
<tr><td></td><td></td><td>WO        2021-040033    A1</td><td>04 March 2021</td></tr>
<tr><td>WO        2019-235885    A1</td><td>12 December 2019</td><td>CN        111742431    A</td><td>02 October 2020</td></tr>
<tr><td></td><td></td><td>CN        111742431    B</td><td>10 October 2023</td></tr>
<tr><td></td><td></td><td>EP        3742533    A1</td><td>25 November 2020</td></tr>
<tr><td></td><td></td><td>EP        3742533    A4</td><td>09 June 2021</td></tr>
<tr><td></td><td></td><td>JP        2021-514524    A</td><td>10 June 2021</td></tr>
<tr><td></td><td></td><td>JP        7191342    B2</td><td>19 December 2022</td></tr>
<tr><td></td><td></td><td>KR  10-2019-0139033    A</td><td>17 December 2019</td></tr>
<tr><td></td><td></td><td>KR        10-2288292    B1</td><td>10 August 2021</td></tr>
<tr><td></td><td></td><td>US        11973209    B2</td><td>30 April 2024</td></tr>
<tr><td></td><td></td><td>US        2021-0005875    A1</td><td>07 January 2021</td></tr>
<tr><td>KR    10-2022-0041032    A</td><td>31 March 2022</td><td>CN        115529825    A</td><td>27 December 2022</td></tr>
<tr><td></td><td></td><td>CN        115529825    B</td><td>08 March 2024</td></tr>
<tr><td></td><td></td><td>EP        4137460    A1</td><td>22 February 2023</td></tr>
<tr><td></td><td></td><td>EP        4137460    A4</td><td>28 February 2024</td></tr>
<tr><td></td><td></td><td>JP        2023-521317    A</td><td>24 May 2023</td></tr>
<tr><td></td><td></td><td>JP        7476344    B2</td><td>30 April 2024</td></tr>
<tr><td></td><td></td><td>KR        10-2498355    B1</td><td>10 February 2023</td></tr>
<tr><td></td><td></td><td>US        2023-0290942    A1</td><td>14 September 2023</td></tr>
<tr><td></td><td></td><td>WO        2022-065935    A1</td><td>31 March 2022</td></tr>
<tr><td>WO        2022-138451    A1</td><td>30 June 2022</td><td>EP        4270548    A1</td><td>01 November 2023</td></tr>
<tr><td></td><td></td><td>JP        2022-138451    A1</td><td>30 June 2022</td></tr>
<tr><td></td><td></td><td>US        2023-0361292    A1</td><td>09 November 2023</td></tr>
<tr><td>CN        115004403    A</td><td>02 September 2022</td><td>EP        4099430    A1</td><td>07 December 2022</td></tr>
<tr><td></td><td></td><td>EP        4099430    A4</td><td>01 November 2023</td></tr>
<tr><td></td><td></td><td>JP        2021-153290    A1</td><td>05 August 2021</td></tr>
<tr><td></td><td></td><td>US        2023-0071451    A1</td><td>09 March 2023</td></tr>
<tr><td></td><td></td><td>WO        2021-153290    A1</td><td>05 August 2021</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230043516
- KR 1020140093529